# FASCICULE DE BREVET EUROPEEN

(11) **EP 2 619 118 B1**
(45) Date de publication et mention de la délivrance du brevet: **15.02.2017**
(21) Numéro de dépôt: 11748900.5
(22) Date de dépôt: 19.08.2011
(51) Int. Cl.: B65H 31/30

(54) **DISPOSITIF DE TRANSPORT DE PAQUETS POUR MACHINE DE CERCLAGE**
VORRICHTUNG FÜR DEN TRANSPORT VON BÜNDELN FÜR EINE UMREIFUNGSMASCHINE
DEVICE FOR TRANSPORTING BUNDLES FOR A STRAPPING MACHINE

(30) Priorité: 22.09.2010 EP 10010184
(43) Date de publication de la demande: 31.07.2013
(73) Titulaire: BOBST MEX SA, 1031 Mex (CH)
(72) Inventeur: VIATTE, Olivier, CH-1482 Cugy (CH)
(74) Mandataire: Poirier, Jean-Michel Serge
(86) Numéro de dépôt international: PCT/EP2011/004184
(87) Numéro de publication internationale: WO 2012/038013

(56) Documents cités:
- EP-A1- 0 553 724
- EP-A1- 1 293 459
- EP-A1- 2 157 038
- EP-A1- 2 192 067
- EP-A2- 0 626 330
- US-A- 3 889 824

## Description

La présente invention concerne un dispositif permettant de transporter des objets plats empilés en paquets, à travers une machine chargée de lier chacun desdits paquets.

L'invention trouve une application particulièrement avantageuse dans le domaine de l'emballage.

Dans l'industrie de l'emballage, la fabrication des boîtes pliantes s'effectue traditionnellement en ligne, en pliant et en collant des découpes au moyen de machines communément appelées plieuses-colleuses. Généralement, les boîtes pliantes sont délivrées sous la forme d'un flux continu, de sorte qu'il s'avère pertinent de les conditionner en paquets dès lors que lesdites boîtes sont destinées à être stockées avant leur première utilisation.

Dans cette logique, il est connu de conditionner les boîtes pliantes sous forme de paquets cerclés, c'est-à-dire d'empilements de boîtes qui sont attachés individuellement par l'intermédiaire d'un ou plusieurs liens. Différents types de moyens de cerclage peuvent être utilisés pour accomplir cette tache, suivant que l'on désire par exemple ficeler chaque paquet au moyen d'au moins un lien fin tel qu'une ficelle, cercler chaque paquet par l'intermédiaire d'au moins un lien étroit tel qu'un feuillard, ou banderoler chaque paquet grâce à l'utilisation d'au moins un lien large tel qu'une bande.

Dans une machine de cerclage standard, deux zones sont plus particulièrement importantes. Il s'agit tout d'abord de la zone d'assemblage qui est située à l'entrée de la machine, et qui est destinée à la formation de chaque paquet. Et il y a ensuite la zone de cerclage qui est positionnée plus au coeur de la machine, et qui est quant à elle dédiée au liage de chaque paquet. Bien entendu, un dispositif de transport est prévu pour assurer le déplacement individuel de chaque paquet à travers la machine de cerclage, notamment de la zone d'assemblage à la zone de cerclage.

Or en pratique, un tel déplacement est traditionnellement réalisé en deux temps afin de pouvoir disposer de temps de cycle réduits. Cette caractéristique implique l'existence d'une zone intermédiaire, à savoir une zone de transfert qui est logiquement située entre la zone d'assemblage et la zone de cerclage. Quoi qu'il en soit, c'est pour cette raison que ce type de dispositif de transport met habituellement en oeuvre deux moyens de transport distincts.

Concrètement, des premiers moyens de transport assurent le déplacement de chaque paquet de la zone d'assemblage à la zone de transfert, tandis que des seconds moyens de transport prennent en charge le déplacement dudit paquet de la zone de transfert à la zone de cerclage. Dans cette logique, la vocation des premiers moyens de transport est avant tout de libérer rapidement la zone d'assemblage pour pouvoir débuter au plus vite la formation d'un nouveau paquet. Celle des seconds moyens de transport est par contre d'alimenter en paquets les moyens de cerclage, et ceci sans temps mort.

A cet égard, on connaît notamment de l'état de la technique, une machine de cerclage qui sert à attacher ensemble des boîtes pliantes conditionnées en paquets, et qui dispose d'un tel dispositif de transport de paquets. Dans cette machine, la formation de chaque paquet s'opère par dépôts successifs de lots de boîtes, au milieu de quatre guides en forme de cornières qui sont disposés verticalement aux quatre coins de l'empilement. Les deux guides avals sont pourvus de butées mobiles dont l'escamotage autorise l'extraction vers l'avant du paquet. Les premiers moyens de transport sont constitués par un pousseur pneumatique qui est à même de pousser le paquet par l'arrière lorsque celui-ci est complet, en vue de l'extraire des guides et l'amener vers les seconds moyens de transport. Ces seconds moyens de transport se présentent quant à eux sous la forme d'une association de tapis roulants qui est composée d'un tapis horizontal, de deux tapis verticaux et d'un transport supérieur qui tournent tous dans le même sens et à la même vitesse.

Ce type de dispositif de transport présente toutefois l'inconvénient d'être compliqué à régler, tant au niveau de la position des guides de la zone d'assemblage, que de la synchronisation des tapis roulants des seconds moyens de transport.

Un autre désavantage majeur d'un tel dispositif de transport réside dans le fait qu'il s'avère insuffisamment précis en terme de guidage. On pense notamment ici à la faible efficacité des guides verticaux de la zone d'assemblage au moment de la mise en action du pousseur pneumatique, mais aussi à celle des tapis roulants compte tenu des frottements qui apparaissent immanquablement lors du passage des paquets.

Le document EP-A-2 157 038 décrit une unité d'empilage comprenant un dispositif d'empilage pour former une pile de produits plats, et un dispositif de stockage intermédiaire monté en aval pour reprendre, stocker temporairement et délivrer la pile. La pile est délivrée ou convoyée à partir du dispositif de stockage intermédiaire vers un dispositif de traitement de pile monté en aval, tel qu'un dispositif de cerclage. Le dispositif d'empilage comprend des moyens de transport sous la forme de cornières fixées sur des courroies latérales. Le dispositif de stockage intermédiaire comprend des moyens de transport sous la forme d'un tapis roulant inférieur et de butées avant et arrière prévues sur des courroies latérales. Ainsi ce document décrit un dispositif de transport ayant les caractéristiques du préambule de la revendication 1.

Aussi, le problème technique à résoudre par l'objet de la présente invention, est de proposer un dispositif de transport pour le déplacement au sein d'une machine de cerclage offrant une efficacité sensiblement accrue, tout en étant plus facile à régler.

La solution au problème technique posé consiste, selon la présente invention, en ce que chaque organe pousseur des premiers moyens de transport est apte à s'escamoter vers le bas suivant une direction sensiblement verticale, et chaque organe pousseur des seconds moyens de transport est apte à s'escamoter vers le haut suivant une direction sensiblement verticale.

Il est important de souligner que l'invention s'applique à toute machine de cerclage, quelle que soit la technique de liage mise en oeuvre. Un dispositif de transport conforme à l'invention peut en effet équiper indifféremment une machine à même de ficeler chaque paquet au moyen d'au moins un lien fin tel qu'une ficelle, une machine chargée de cercler chaque paquet par l'intermédiaire d'au moins un lien étroit tel qu'un feuillard, une machine capable de banderoler chaque paquet grâce à l'utilisation d'au moins un lien large tel qu'une bande, ou plus généralement une machine en mesure d'attacher individuellement chaque paquet par une quelconque combinaison de liens de nature et de dimensions quelconques. Cela signifie en des termes communs que la machine de cerclage peut notamment être une ficeleuse, une cercleuse ou une banderoleuse.

Quoi qu'il en soit, l'invention telle qu'ainsi définie présente l'avantage de garantir un déplacement extrêmement précis des paquets à travers la machine de cerclage. En effet, outre leur classique fonction de transport, les premiers moyens de transport jouent deux autres rôles supplémentaires qui sont néanmoins complémentaires de leur fonction de transport. Il s'agit plus particulièrement d'un rôle de guidage qui est tenu lors de la formation des paquets, et d'un rôle de maintien qui est assuré durant le déplacement desdits paquets.

La présente invention concerne en outre les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. La description est par ailleurs donnée en référence aux dessins annexés dans lesquels:
La figure 1 représente en perspective une machine de cerclage qui est équipée d'un dispositif de transport conforme à l'invention.
Les figures 2 à 6 sont des coupes qui illustrent cinq phases de la cinématique de déplacement des paquets à l'intérieur de la machine de cerclage.

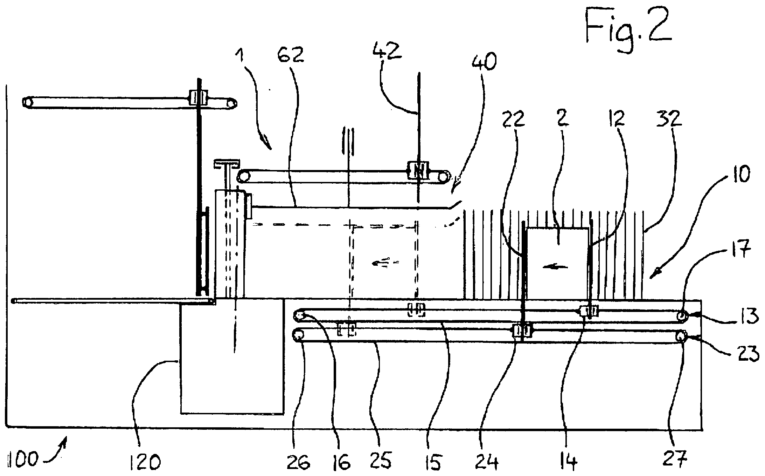

La figure 2 montre une première phase qui est caractérisée par la présence d'un paquet dans la zone d'assemblage.

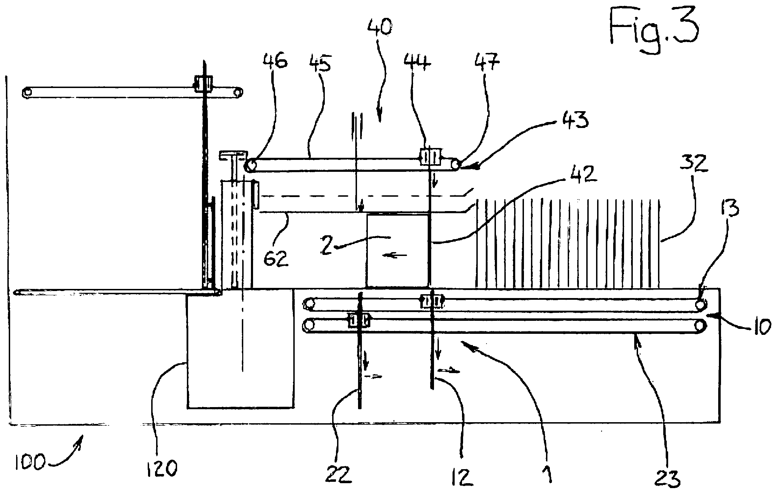

La figure 3 fait apparaître une seconde phase au cours de laquelle le paquet est positionné dans la zone de transfert.

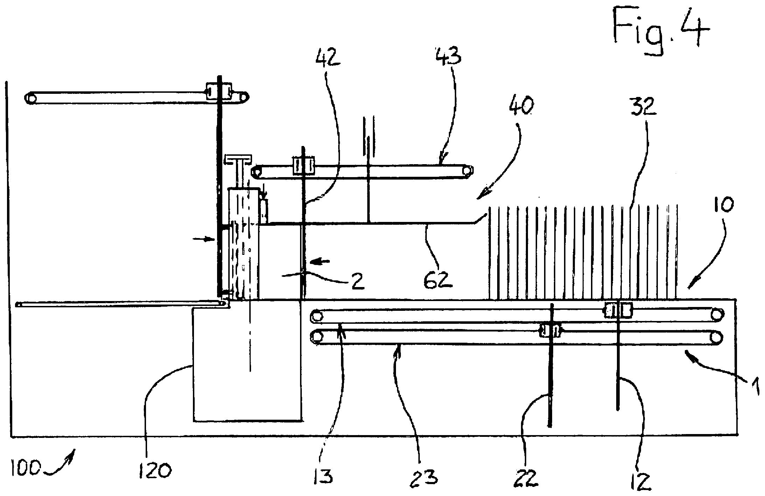

La figure 4 concerne une troisième phase qui correspond à l'arrivée du paquet dans la zone de cerclage, et à la pose d'un premier lien autour dudit paquet.

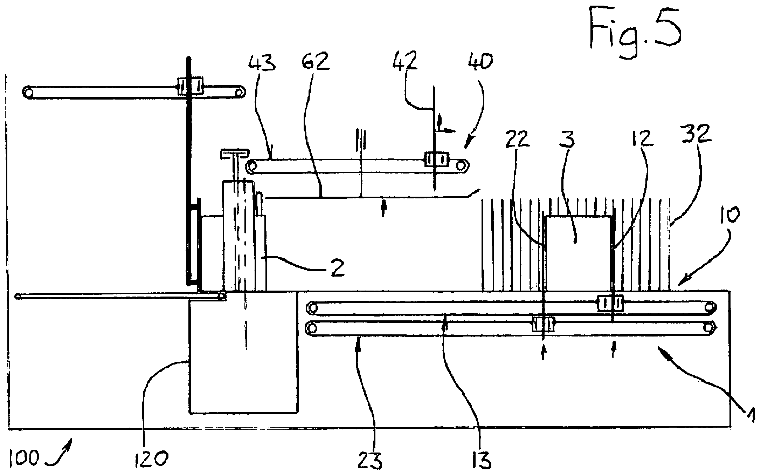

La figure 5 représente une quatrième phase au cours de laquelle un second lien d'assemblage est posé autour du paquet.

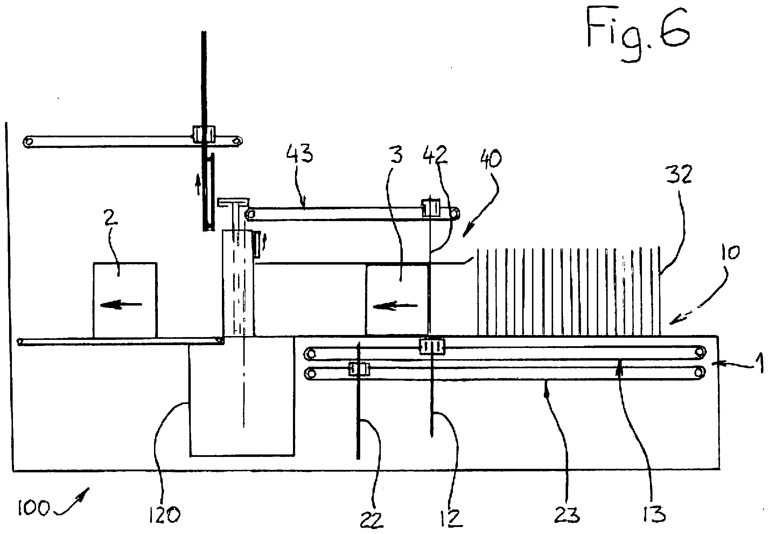

La figure 6 montre une cinquième phase qui est caractérisée par l'évacuation du paquet.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

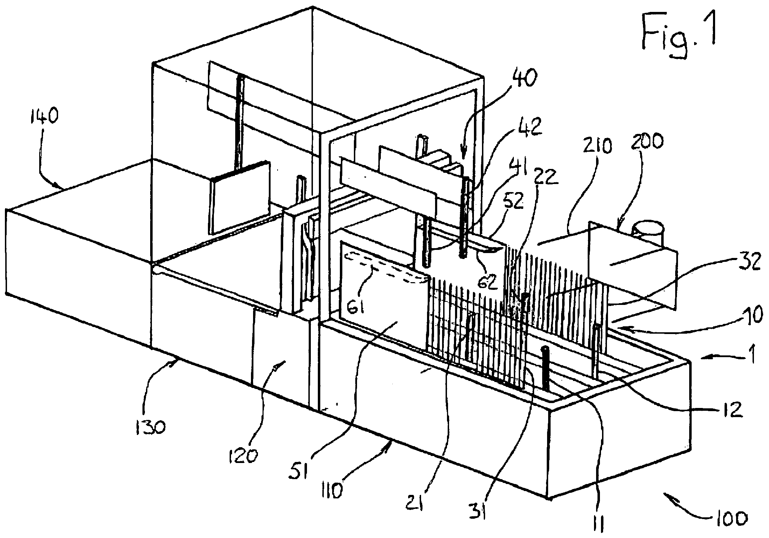

Les figures 1 à 6 illustrent une machine de cerclage 100 qui est destinée à s'intégrer en tant que module dans une machine d'empaquetage conçue pour transformer un flot continu de boîtes pliantes sortant d'une plieuse-colleuse, en une succession de paquets cerclés prêts à être manipulés et/ou stockés.

Comme son nom l'indique, la machine de cerclage 100 est plus particulièrement chargée de lier des empilements de boîtes pliantes, formant paquets 2, 3, qui sont formés tout en amont de ladite machine 100, en l'occurrence au niveau d'une table d'assemblage 110. Pour remplir sa fonction, la machine de cerclage 100 dispose d'une unité de cerclage 120 qui est en mesure d'attacher ensemble les objets plats de chaque paquet 2, 3, et qui est intégrée à demeure dans une enceinte 130 placée à la sortie de la table d'assemblage 110. Une fois cerclés, les paquets 2, 3 sont alors mis à disposition au niveau d'une table de réception 140 qui est positionnée directement en aval de l'enceinte 130.

Ainsi qu'on peut le voir sur l'ensemble des figures, le déplacement des paquets 2, 3 de boîtes pliantes à travers la machine de cerclage 100 est assuré par un dispositif de transport 1. Ce dernier est tout d'abord doté de premiers moyens de transport 10 qui sont chargés de déplacer chaque paquet 2, 3 d'une zone d'assemblage dans laquelle ledit paquet 2, 3 est formé à partir d'un empilage de boîtes pliantes (figure 2), à une zone de transfert dans laquelle ledit paquet 2, 3 est positionné en dehors de la zone d'assemblage (figure 3). Mais le dispositif de transport 1 est également pourvu de seconds moyens de transport 40 qui sont quant à eux conçus pour déplacer chaque paquet 2, 3 de la zone de transfert à une zone de cerclage dans laquelle les objets plats composant ledit paquet 2, 3 sont attachés ensemble (figure 4).

Conformément à l'objet de la présente invention, les premiers moyens de transport 10 sont en outre en mesure de guider longitudinalement l'empilement des boîtes pliantes lors de la formation de chaque paquet 2, 3 dans la zone d'assemblage, mais aussi de maintenir longitudinalement ledit paquet 2, 3 lors de son déplacement de la zone d'assemblage à la zone de transfert.

Selon une particularité de l'invention, les premiers moyens de transport 10 sont tout d'abord dotés d'au moins un organe pousseur 11, 12 qui est en mesure de se positionner à l'arrière de chaque paquet 2, 3 placé dans la zone d'assemblage (figure 2), et à le pousser jusqu'à la zone de transfert (pointillés de la figure 2) avant de s'escamoter (figure 3) pour revenir à sa position initiale (figures 4 et 5). Mais les premiers moyens de transport 10 sont également pourvus d'au moins un organe de maintien 21, 22 qui est à même de se positionner à l'avant de chaque paquet 2, 3 placé dans la zone d'assemblage (figure 2), et à avancer jusqu'à la zone de transfert de manière concomitante par rapport à chaque organe pousseur 11, 12 (pointillés de la figure 2), avant de s'escamoter (figure 3) pour revenir à sa position initiale (figures 4 et 5).

De manière particulièrement avantageuse, chaque organe pousseur 11, 12 est apte à être entraîné en déplacement parallèlement à l'axe de la machine de cerclage 100, par l'intermédiaire d'un mécanisme d'entraînement 13 qui est positionné en dessous de l'espace a travers lequel transitent les paquets 2, 3 au sein de ladite machine de cerclage 100.

Dans cet logique, l'ensemble est agencé de manière à ce que chaque organe pousseur 11, 12 puisse s'escamoter vers le bas suivant une direction sensiblement verticale conformément à la figure 3.

Dans cet exemple de réalisation, on dénombre en fait deux organes pousseurs 11, 12 qui sont implantés symétriquement de part et d'autre de l'axe de la machine de cerclage 100 (figure 1). Concrètement, chaque organe pousseur 11, 12 se présente sous la forme d'une barre verticale qui est montée transversalement mobile en translation suivant une direction parallèle à l'axe machine, par l'intermédiaire du mécanisme d'entraînement 13. Pour cela, chaque barre verticale est supportée par un chariot 14 qui est fixé à une courroie crantée 15 tendue entre un rouleau de renvoi 16 et un arbre d'entraînement 17 couplé à un moteur électrique (non représenté). Afin que chaque organe pousseur 11, 12 puisse par ailleurs s'escamoter verticalement vers le bas, chaque barre verticale est en outre montée longitudinalement mobile en translation par rapport au chariot 14 qui la supporte, suivant une direction sensiblement perpendiculaire à l'axe de la machine 100 (figure 3).

Conformément à une autre caractéristique avantageuse, chaque organe de maintien 21, 22 est apte à être entraîné en déplacement parallèlement à l'axe de la machine de cerclage 100, au moyen d'un mécanisme d'entraînement 23 qui est positionné en dessous de l'espace à travers lequel transitent les paquets 2,3.

Dans cette logique, l'ensemble est agencé de manière à ce que chaque organe de maintien 21, 22 puisse s'escamoter vers le bas suivant une direction sensiblement verticale.

De manière analogue à ce qui a été dit au sujet des organes pousseurs 11, 12, on dénombre deux organes de maintien 21, 22 qui sont implantés symétriquement de part et d'autre de l'axe de la machine de cerclage 100 (figure 1). Chaque organe de maintien 21, 22 se présente sous la forme d'une barre verticale qui est montée transversalement mobile en translation suivant une direction parallèle à l'axe machine, par l'intermédiaire du mécanique d'entraînement 23. Pour cela, chaque barre verticale est supportée par un chariot 24 qui est fixé à une courroie crantée 25 tendue entre un rouleau de renvoi 26 et un arbre d'entraînement 27 couplé à un moteur électrique (non représenté). Afin qu'il puisse s'escamoter verticalement vers le bas, chaque organe de maintien 21, 22 est par ailleurs monté longitudinalement mobile en translation par rapport au chariot 24 qui la supporte, suivant une direction sensiblement perpendiculaire à l'axe de la machine 100 (figure 3).

Selon une autre particularité de l'invention, les premiers moyens de transport 10 comprennent en outre deux guides latéraux 31, 32 qui s'étendent de part et d'autre de l'espace à travers lequel transitent les paquets 2, 3, sur une longueur allant sensiblement de la zone d'assemblage à la zone de transfert. L'ensemble est par ailleurs agencé de manière à ce que les deux guides latéraux 31, 32 soient en mesure, d'une part, de guider transversalement l'empilement des boîtes pliantes lors de la formation de chaque paquet 2, 3 dans la zone d'assemblage, et d'autre part, de maintenir transversalement ledit paquet 2, 3 lors de son déplacement de la zone d'assemblage à la zone de transfert.

De manière particulièrement avantageuse, au moins un guide latéral 31, 32 est monté réglable en position suivant une direction transversale. Cela sous-entend que le guide latéral 31, 32 en question est monté mobile en translation transversale, et qu'il est couplé à des moyens de réglage permettant d'ajuster précisément sa position.

Conformément à un mode de réalisation actuellement préféré de l'invention, chaque guide latéral 31, 32 est constitué par un râtelier qui s'étend sensiblement de la zone d'assemblage à la zone de transfert.

Ainsi qu'on peut le voir clairement sur les différentes figures, chaque râtelier comporte une pluralité de broches parallèles qui s'étendent de manière sensiblement verticale avec leurs extrémités orientées vers le haut.

Un telle structure s'avère particulièrement avantageuse dès lors qu'elle est combinée comme dans cet exemple de réalisation, avec l'utilisation d'une pince de manutention 200 d'un robot palettiseur (non représenté). Cette pince 200 sera choisie de manière à disposer de doigts 210 dont l'écartement est compatible avec celui des broches des râteliers. La pince 200 sera alors en mesure de venir déposer des lots de boîtes pliantes entre les deux râteliers, en descendant de manière sensiblement verticale, avec le corps de ladite pince positionné à l'extérieur de la zone d'assemblage, et les doigts 210 pointant à l'intérieur. La pince 200 pourra ensuite être retirée en la déplaçant sensiblement à l'horizontale, suivant une direction transversale par rapport à l'axe machine.

Selon une autre particularité de l'invention, les seconds moyens de transport 40 sont tout d'abord dotés d'au moins un organe pousseur 41, 42 qui est en mesure de se positionner à l'arrière de chaque paquet 2, 3 placé dans la zone de transfert (figure 3), et à le pousser jusqu'à la zone de cerclage (figure 4) avant de s'escamoter pour revenir à sa position initiale (figure 5). Par ailleurs, les seconds moyens de transport 40 sont également pourvus de deux guides latéraux 51, 52 qui s'étendent de part et d'autre de l'espace à travers lequel transitent les paquets 2, 3, sur une longueur allant sensiblement de la zone de transfert à la zone de cerclage (figure 1). Enfin, les seconds moyens de transport 40 disposent en outre d'au moins un organe presseur 61, 62 qui est disposé au dessus de l'espace à travers lequel transitent les paquets 2, 3 en allant de la zone de transfert à la zone de cerclage. L'ensemble est agencé de manière à ce que chaque organe presseur 61, 62 soit à même de presser verticalement chaque paquet 2, 3 circulant dans l'espace de transit précédemment défini (pointillés de la figure 2 et figure 4).

De manière particulièrement avantageuse, chaque organe pousseur 41, 42 est apte à être entraîné en déplacement parallèlement à l'axe de la machine de cerclage 100, par l'intermédiaire d'un mécanisme d'entraînement 43 qui est positionné au dessus de l'espace à travers lequel transitent les paquets 2, 3 au sein de la machine de cerclage 100.

Dans cette logique, chaque organe pousseur 41, 42 est agencé de manière à pouvoir s'escamoter vers le haut suivant une direction sensiblement verticale.

Dans cet exemple de réalisation, on dénombre ici aussi deux organes pousseurs 41, 42 qui sont implantés symétriquement de part et d'autre de l'axe machine de cerclage 100. Concrètement, chaque organe pousseur 41, 42 se présente sous la forme d'une barre verticale qui est montée transversalement mobile en translation suivant une direction parallèle à l'axe machine, par l'intermédiaire du mécanique d'entraînement 43. Pour cela, chaque barre verticale est suspendue à un chariot 44 qui est fixé à une courroie crantée 45 tendue entre un rouleau de renvoi 46 et un arbre d'entraînement 47 couplé à un moteur électrique (non représenté). Afin que chaque organe pousseur 41, 42 puisse par ailleurs s'escamoter verticalement vers le haut, chaque barre verticale est en outre montée longitudinalement mobile en translation par rapport au chariot 44 qui la supporte, suivant une direction sensiblement perpendiculaire à l'axe de la machine 100.

Conformément à une autre caractéristique avantageuse, au moins un guide latéral 51, 52 est monté réglable en position suivant une direction sensiblement transversale. Cela signifie en d'autres termes que le guide latéral 51, 52 concerné est monté mobile en translation transversale, et qu'il est par ailleurs couplé à des moyens de réglage permettant d'ajuster précisément sa position.

Dans cet exemple de réalisation, les guides latéraux 51, 52 sont au nombre de deux. Conformément à la figure 1, ils sont implantés symétriquement de part et d'autre de l'axe de la machine de cerclage 100, et se présentent sous la forme de deux plaques verticales parallèles.

Selon une autre particularité avantageuse de l'invention, au moins un organe presseur 61, 62 est monté réglable en position suivant une direction sensiblement transversale.

Dans cet exemple de réalisation, on dénombre une nouvelle fois deux organes presseurs 61, 62 qui sont implantés symétriquement de part et d'autre de l'axe de la machine de cerclage 100 ainsi qu'on peut le voir à la figure 1. Concrètement, chaque organe presseur 61, 62 se présente sous la forme d'une barre sensiblement horizontale qui est montée transversalement mobile en translation suivant une direction sensiblement perpendiculaire par rapport à l'axe machine.

Bien entendu, l'invention concerne plus globalement toute machine de cerclage 100 capable d'attacher ensemble des objets plats conditionnés en paquets 2, 3, et comportant au moins un dispositif de transport 1 tel que précédemment décrit.

## Revendications

1. Dispositif de transport (1) pour le déplacement au sein d'une machine de cerclage (100), d'une succession de paquets (2, 3) composés d'objets plats empilés, comprenant:
- des premiers moyens de transport (10), à même de déplacer chaque paquet (2, 3) d'une zone d'assemblage dans laquelle ledit paquet (2, 3) est formé à partir d'un empilage d'objets plats, à une zone de transfert dans laquelle ledit paquet (2, 3) est positionné en dehors de la zone d'assemblage,
comportant au moins un organe pousseur (11, 12) qui est apte à se positionner à l'arrière de chaque paquet (2, 3) placé dans la zone d'assemblage, et à le pousser jusqu'à la zone de transfert avant de s'escamoter pour revenir à sa position initiale, et
étant en outre aptes à guider longitudinalement l'empilement des objets plats lors de la formation de chaque paquet (2, 3) dans la zone d'assemblage, et à maintenir longitudinalement ledit paquet (2, 3) lors de son déplacement de la zone d'assemblage à la zone de transfert, ainsi que
- des seconds moyens de transport (40), à même de déplacer chaque paquet (2, 3) de la zone de transfert à une zone de cerclage dans laquelle les objets plats composant ledit paquet (2, 3) sont attachés ensemble, et
comportant au moins un organe pousseur (41,42) qui est apte à se positionner à l'arrière de chaque paquet (2, 3) placé dans la zone de transfert, et à le pousser jusqu'à la zone de cerclage avant de s'escamoter pour revenir à sa position initiale,
**caractérisé en ce que**
- chaque organe pousseur (11, 12) des premiers moyens de transport (10) est apte à s'escamoter vers le bas suivant une direction sensiblement verticale, et
- chaque organe pousseur (41, 42) des seconds moyens de transport (40) est apte à s'escamoter vers le haut suivant une direction sensiblement verticale.

2. Dispositif de transport (1) selon la revendication 1, **caractérisé en ce que** les premiers moyens de transport (10) comportent au moins un organe de maintien (21, 22) qui est apte à se positionner à l'avant de chaque paquet (2, 3) placé dans la zone d'assemblage, et à avancer jusqu'à la zone de transfert de manière concomitante par rapport à chaque organe pousseur (11, 12), avant de s'escamoter pour revenir à sa position initiale.

3. Dispositif de transport (1) selon la revendication 2, **caractérisé en ce que** chaque organe pousseur (11, 12) est apte à être entraîné en déplacement parallèlement à l'axe de la machine de cerclage (100), au moyen d'un mécanisme d'entraînement (13) qui est positionné en dessous de l'espace à travers lequel transitent les paquets (2, 3).

4. Dispositif de transport (1) selon la revendication 2 ou 3, **caractérisé en ce que** chaque organe de maintien (21, 22) est apte à être entraîné en déplacement parallèlement à l'axe de la machine de cerclage (100), au moyen d'un mécanisme d'entraînement (23) qui est positionné en dessous de l'espace à travers lequel transitent les paquets (2, 3).

5. Dispositif de transport (1) selon l'une quelconque des revendications 2 à 4, **caractérisé en ce que** chaque organe de maintien (21, 22) est apte à s'escamoter vers le bas suivant une direction sensiblement verticale.

6. Dispositif de transport (1) selon l'une quelconque des revendications précédentes, **caractérisé en ce que** les premiers moyens de transport (10) comportent en outre deux guides latéraux (31, 32) qui s'étendent de part et d'autre de l'espace à travers transitent les paquets (2, 3), sur une longueur allant sensiblement de la zone d'assemblage à la zone de transfert, et **en ce que** les deux guides latéraux (31, 32) sont aptes d'une part à guider transversalement l'empilement des objets plats lors de la formation de chaque paquet (2, 3) dans la zone d'assemblage, et d'autre part à maintenir transversalement ledit paquet (2, 3) lors de son déplacement de la zone d'assemblage à la zone de transfert.

7. Dispositif de transport (1) selon la revendication 6, **caractérisé en ce qu'**au moins un guide latéral (31, 32) est monté réglable en position suivant une direction sensiblement transversale.

8. Dispositif de transport (1) selon l'une des revendications 6 ou 7, **caractérisé en ce que** chaque guide latéral (31, 32) est constitué par un râtelier qui s'étend sensiblement de la zone d'assemblage à la zone de transfert.

9. Dispositif de transport (1) selon la revendication 8, **caractérisé en ce que** chaque râtelier comporte une pluralité de broches parallèles qui s'étendent de manière sensiblement verticale avec leurs extrémités orientées vers le haut.

10. Dispositif de transport (1) selon l'une quelconque des revendications précédentes, **caractérisé en ce que** les seconds moyens de transport (40) comportent deux guides latéraux (51, 52) qui s'étendent de part et d'autre de l'espace à travers lequel transitent les paquets (2, 3), sur une longueur allant sensiblement de la zone de transfert à la zone de cerclage, ainsi qu'au moins un organe presseur (61, 62) qui est disposé au dessus de l'espace à travers lequel transitent les paquets (2, 3) en allant de la zone de transfert à la zone de cerclage, et qui est apte à presser verticalement chaque paquet (2, 3) circulant dans ledit espace de transit.

11. Dispositif de transport (1) selon la revendication 10, **caractérisé en ce que** chaque organe pousseur (41,42) est apte à être entraîné en déplacement parallèlement à l'axe de la machine de cerclage (100), au moyen d'un mécanisme d'entraînement (43) qui est positionné au dessus de l'espace à travers lequel transitent les paquets (2, 3).

12. Dispositif de transport (1) selon la revendication 10 ou 11, **caractérisé en ce qu'**au moins un guide latéral (51, 52) est monté réglable en position suivant une direction sensiblement transversale.

13. Dispositif de transport (1) selon l'une quelconque des revendications 10 à 12, **caractérisé en ce qu'**au moins un organe presseur (61, 62) est monté réglable en position suivant une direction sensiblement transversale.

14. Machine de cerclage (100) d'objets plats conditionnés en paquets (2, 3), **caractérisée en ce qu'**elle comporte au moins un dispositif de transport (1) selon l'une quelconque des revendications précédentes.

## Patentansprüche

1. Transportvorrichtung (1) zum Verschieben einer Folge von Paketen (2, 3), die aus gestapelten flachen Gegenständen bestehen, in einer Umreifungsmaschine (100), umfassend:
- erste Transportmittel (10), die imstande sind, jedes Paket (2, 3) von einem Verbindungsbereich, in dem das Paket (2, 3) aus einem Stapeln von flachen Gegenständen gebildet wird, zu einem Übergangsbereich zu verschieben, in dem das Paket (2, 3) außerhalb des Verbindungsbereichs positioniert ist,
umfassend mindestens ein Schubelement (11, 12), das geeignet ist, hinter jedem Paket (2, 3) positioniert zu werden, das in dem Verbindungsbereich angeordnet ist, und es bis zu dem Übergangsbereich zu schieben, bevor es sich einzieht, um in seine Ausgangsposition zurückzukehren, und
die zudem geeignet sind, das Stapeln der flachen Gegenstände während des Bildens jedes Pakets (2, 3) in dem Verbindungsbereich in Längsrichtung zu führen und das Paket (2, 3) während seines Verschiebens von dem Verbindungsbereich zu dem Übergangsbereich in Längsrichtung zu halten, sowie
- zweite Transportmittel (40), die imstande sind, jedes Paket (2, 3) von dem Übergangsbereich in einen Umreifungsbereich zu verschieben, in dem die flachen Gegenstände, die das Paket (2, 3) bilden, miteinander verbunden werden, und
umfassend mindestens ein Schubelement (41, 42), das geeignet ist, hinter jedem Paket (2, 3) positioniert zu werden, das in dem Übergangsbereich angeordnet ist, und es bis zu dem Umreifungsbereich zu schieben, bevor es sich einzieht, um in seine Ausgangsposition zurückzukehren,
**dadurch gekennzeichnet, dass**
- jedes Schubelement (11, 12) der ersten Transportmittel (10) geeignet ist, sich in einer im Wesentlichen vertikalen Richtung nach unten einzuziehen, und
- jedes Schubelement (41, 42) der zweiten Transportmittel(40) geeignet ist, sich in einer im Wesentlichen vertikalen Richtung nach oben einzuziehen.

2. Transportvorrichtung (1) nach Anspruch 1, **dadurch gekennzeichnet, dass** die ersten Transportmittel (10) mindestens ein Halteelement (21, 22) aufweisen, das geeignet ist, vor jedem Paket (2, 3) positioniert zu werden, das in dem Verbindungsbereich angeordnet ist, und gleichzeitig mit jedem Schubelement (11, 12) bis zu dem Übergangsbereich vorzurücken, bevor es sich einzieht, um in seine Ausgangsposition zurückzukehren.

3. Transportvorrichtung (1) nach Anspruch 2, **dadurch gekennzeichnet, dass** jedes Schubelement (11, 12) geeignet ist, mittels einer Antriebsvorrichtung (13), die unterhalb des Raums angeordnet ist, durch den die Pakete (2, 3) laufen, in Verschiebung parallel zu der Achse der Umreifungsmaschine (100) angetrieben zu werden.

4. Transportvorrichtung (1) nach Anspruch 2 oder 3, **dadurch gekennzeichnet, dass** jedes Halteelement (21, 22) geeignet ist, mittels einer Antriebsvorrichtung (23), die oberhalb des Raums angeordnet ist, durch den die Pakete (2, 3) laufen, in Verschiebung parallel zu der Achse der Umreifungsmaschine (100) angetrieben zu werden.

5. Transportvorrichtung (1) nach einem der Ansprüche 2 bis 4, **dadurch gekennzeichnet, dass** jedes Halteelement (21, 22) geeignet ist, sich in einer im Wesentlichen vertikalen Richtung nach unten einzuziehen.

6. Transportvorrichtung (1) nach einem der vorhergehenden Ansprüche, **dadurch gekennzeichnet, dass** die ersten Transportmittel (10) zudem zwei seitliche Führungen (31, 32), die sich auf beiden Seiten des Raums erstrecken, durch den die Pakete (2, 3) laufen, auf einer Länge, die im Wesentlichen von dem Verbindungsbereich bis zu dem Übergangsbereich geht, aufweisen, und dass die beiden seitlichen Führungen (31, 32) geeignet sind, einerseits das Stapeln der flachen Gegenstände während des Bildens jedes Pakets (2, 3) in dem Verbindungsbereich in Querrichtung zu führen und andererseits das Paket (2, 3) während seines Verschiebens von dem Verbindungsbereich zu dem Übergangsbereich in Querrichtung zu halten.

7. Transportvorrichtung (1) nach Anspruch 6, **dadurch gekennzeichnet, dass** mindestens eine seitliche Führung (31, 32) positionseinstellbar in einer im Wesentlichen transversalen Richtung montiert ist.

8. Transportvorrichtung (1) nach einem der Ansprüche 6 oder 7, **dadurch gekennzeichnet, dass** jede seitliche Führung (31, 32) aus einem Gestell gebildet ist, das sich im Wesentlichen von dem Verbindungsbereich zu dem Übergangsbereich erstreckt.

9. Transportvorrichtung (1) nach Anspruch 8, **dadurch gekennzeichnet, dass** jedes Gestell mehrere parallele Stifte aufweist, die sich mit ihren Enden, die nach oben gerichtet sind, im Wesentlichen vertikal erstrecken.

10. Transportvorrichtung (1) nach einem der vorhergehenden Ansprüche, **dadurch gekennzeichnet, dass** die zweiten Transportmittel (40) zwei seitliche Führungen (51, 52), die sich auf beiden Seiten des Raums erstrecken, durch den die Pakete (2, 3) laufen, auf einer Länge, die im Wesentlichen von dem Übergangsbereich bis zum Umreifungsbereich geht, und mindestens eine Druckvorrichtung (61, 62) aufweisen, die über dem Raum angeordnet ist, durch den die Pakete (2, 3) laufen, wenn sie von dem Übergangsbereich bis zum Umreifungsbereich gehen, und die geeignet ist, jedes Paket (2, 3), das den Durchgangsraum durchläuft, senkrecht zu drücken.

11. Transportvorrichtung (1) nach Anspruch 10, **dadurch gekennzeichnet, dass** jedes Schubelement (41, 42) geeignet ist, mittels einer Antriebsvorrichtung (43), die oberhalb des Raums angeordnet ist, durch den die Pakete (2, 3) laufen, in Verschiebung parallel zu der Achse der Umreifungsmaschine (100) angetrieben zu werden.

12. Transportvorrichtung (1) nach Anspruch 10 oder 11, **dadurch gekennzeichnet, dass** mindestens eine seitliche Führung (51, 52) positionseinstellbar in einer im Wesentlichen transversalen Richtung montiert ist.

13. Transportvorrichtung (1) nach einem der Ansprüche 10 bis 12, **dadurch gekennzeichnet, dass** mindestens eine Druckvorrichtung (61, 62) positionseinstellbar in einer im Wesentlichen transversalen Richtung montiert ist.

14. Umreifungsmaschine (100) von flachen Gegenständen, die in Paketen (2, 3) verpackt sind, **dadurch gekennzeichnet, dass** sie mindestens eine Transportvorrichtung (1) nach einem der vorhergehenden Ansprüche aufweist.

## Claims

1. Conveyance device (1) for the movement, within a strapping machine (100), of a succession of bundles (2, 3) consisting of stacked flat objects, comprising
- first conveying means (10), capable of moving each bundle (2, 3) from an assembly zone in which said bundle (2, 3) is formed from a stacking of flat objects, to a transfer zone in which said bundle (2, 3) is positioned outside the assembly zone, comprising at least one pushing member (11, 12) that is capable of being positioned behind each bundle (2, 3) placed in the assembly zone, and of pushing it to the transfer zone before retracting to return to its initial position, and
being also capable of longitudinally guiding the stack of the flat objects during the formation of each bundle (2, 3) in the assembly zone, and of longitudinally holding said bundle (2, 3) during its movement from the assembly zone to the transfer zone, and
- second conveying means (40) capable of moving each bundle (2, 3) from the transfer zone to a strapping zone in which the flat objects comprising said bundle (2, 3) are attached together, and
comprising at least one pushing member (41, 42) which is capable of being positioned behind each bundle (2, 3) placed in the transfer zone, and of pushing it up to the strapping zone before being retracted to return to its initial position,
**characterized in that**
- each pushing member (11, 12) of the first conveying means (10) is capable of retracting downward in a substantially vertical direction, and
- each pushing member (41, 42) of the second conveying means (40) is capable of retracting upward in a substantially vertical direction.

2. Conveyance device (1) according to claim 1, **characterized in that** the first conveying means (10) comprise at least one holding member (21, 22) that is capable of being positioned at the front of each bundle (2, 3) placed in the assembly zone, and of advancing up to the transfer zone in a manner concomitant with each pushing member (11, 12) before retracting to return to its initial position.

3. Conveyance device (1) according to claim 2, **characterized in that** each pushing member (11, 12) is capable of being made to move parallel to the axis of the strapping machine (100), by means of a drive mechanism (13) that is positioned beneath the space through which the bundles (2, 3) travel.

4. Conveyance device (1) according to claim 2 or 3, **characterized in that** each holding member (21, 22) is capable of being made to move parallel to the axis of the strapping machine (100), by means of a drive mechanism (23) that is positioned beneath the space through which the bundles (2, 3) travel.

5. Conveyance device (1) according to any one of claims 2 to 4, **characterized in that** each holding member (21, 22) is capable of retracting downward in a substantially vertical direction.

6. Conveyance device (1) according to any one of the preceding claims, **characterized in that** the first conveying means (10) also comprise two lateral guides (31, 32) which extend on either side of the space through which the bundles (2, 3) travel, over a length going substantially from the assembly zone to the transfer zone, and **in that** the two lateral guides (31, 32) are capable on the one hand of transversely guiding the stack of the flat objects during the formation of each bundle (2, 3) in the assembly zone, and on the other hand of transversely holding said bundle (2, 3) during its movement from the assembly zone to the transfer zone.

7. Conveyance device (1) according to claim 6, **characterized in that** at least one lateral guide (31, 32) is mounted so as to be positionally adjustable in a substantially transverse direction.

8. Conveyance device (1) according to one of claims 6 or 7, **characterized in that** each lateral guide (31, 32) is formed by a rack which extends substantially from the assembly zone to the transfer zone.

9. Conveyance device (1) according to claim 8, **characterized in that** each rack comprises a plurality of parallel pins which extend substantially vertically with their ends oriented upward.

10. Conveyance device (1) according to any one of the preceding claims, **characterized in that** the second conveying means (40) comprise two lateral guides (51, 52) which extend on either side of the space through which the bundles (2, 3) travel, over a length going substantially from the transfer zone to the strapping zone, and at least one pressing member (61, 62) which is placed above the space through which the bundles (2, 3) travel while going from the transfer zone to the strapping zone, and which is capable of pressing vertically each bundle (2, 3) traveling in said transit space.

11. Conveyance device (1) according to claim 10, **characterized in that** each pushing member (41, 42) is capable of being made to move parallel to the axis of the strapping machine (100), by means of a drive mechanism (43) which is positioned above the space through which the bundles (2, 3) travel.

12. Conveyance device (1) according to claim 10 or 11, **characterized in that** at least one lateral guide (51, 52) is mounted so as to be positionally adjustable in a substantially transverse direction.

13. Conveyance device (1) according to any one of claims 10 to 12, **characterized in that** at least one pressing member (61, 62) is mounted so as to be positionally adjustable in a substantially transverse direction.

14. Strapping machine (100) for strapping flat objects bundled into bundles (2, 3), **characterized in that** it comprises at least one conveyance device (1) according to any one of the preceding claims.
